# EUROPEAN PATENT APPLICATION

(11) **EP 4 826 952 A1**
(43) Date of publication of application: **21.10.2026**
(21) Application number: 26159989.8
(22) Date of filing: 23.02.2026
(51) Int. Cl.: H02J 7/02, B60L 53/14, B60L 53/53, H01M 10/46, H02J 7/34, H02J 7/40, H02J 7/70, B60L 53/55

(54) **CHARGING SYSTEM AND CHARGER**

(30) Priority: 14.04.2025 JP 2025066019
(71) Applicant: KABUSHIKI KAISHA TOYOTA JIDOSHOKKI, Kariya-shi, Aichi 448-8671 (JP)
(72) Inventor: MIURA, Masahiro, 448-8671 Kariya-shi, Aichi (JP); HIROSE, Shinji, 448-8671 Kariya-shi, Aichi (JP); SATOH, Daisuke, 448-8671 Kariya-shi, Aichi (JP); OKITA, Yushi, 448-8671 Kariya-shi, Aichi (JP); MIYAKE, Keiji, 448-8671 Kariya-shi, Aichi (JP)
(74) Representative: TBK

(57) **Abstract**

A charging system includes a power conversion circuit (PC) configured to convert AC power to DC power, a voltage conversion circuit (VC) configured to convert a voltage of DC power supplied from a first power storage battery (B1, B2) to a specified voltage, a charge plug connection detection circuit (DCc1, DCc2) configured to detect whether a charge plug (Pc) is electrically connected to the first power storage battery (B1, B2), a first control circuit (CNT1) configured to control operation of the power conversion circuit (PC), and a second control circuit (CNT2) configured to control a detection state of the charge plug connection detection circuit (DCc1, DCc2). The second control circuit (CNT2) causes the charge plug connection detection circuit (DCc1, DCc2) to detect that the charge plug (Pc) is electrically connected to the first power storage battery (B1, B2) during charging of the first power storage battery (B1, B2).

## Description

### BACKGROUND ART

The present invention relates to a charging system and a charger.

There has been known a charging system configured to supply power output from a power storage battery as well as power output from an AC power supply to a battery during charging of the battery, in view of rapidly charging of the battery in a situation where a current capacity of the AC power supply is limited. Japanese Patent Application Publication No. 2013-143797 discloses a prior art related to this charging system.

However, in the above-mentioned charging system, when power starts to be supplied to the power storage battery by plugging a charge plug into the power storage battery for charging the battery, there is concern that a user's workload for handling the charge plug increases because the user has to plug the charge plug into the power storage battery every time the power storage battery is charged.

An object according to one aspect of the present invention is, in a charging system including a power storage battery as well as an AC power supply as a power supply for charging a battery, to suppress an increase in a user's workload for handling a charge plug to be plugged into a power storage battery.

### SUMMARY

In accordance with a first aspect of the present invention, there is provided a charging system including a power conversion circuit configured to convert AC power supplied from an AC power supply to DC power, a voltage conversion circuit configured to convert a voltage of DC power supplied from a first power storage battery to a specified voltage, a charge plug connection detection circuit configured to detect whether a charge plug is electrically connected to the first power storage battery, a first control circuit configured to control operation of the power conversion circuit so that the DC power output from the power conversion circuit is supplied to a second power storage battery during charging of the second power storage battery, the first control circuit being configured to allow the first power storage battery to be charged when the charge plug connection detection circuit detects that the charge plug is electrically connected to the first power storage battery, and a second control circuit configured to control a detection state of the charge plug connection detection circuit. The second control circuit causes the charge plug connection detection circuit to detect that the charge plug is electrically connected to the first power storage battery during charging of the first power storage battery.

In accordance with a second aspect of the present invention, there is provided a charging system including a power conversion circuit configured to convert AC power supplied from an AC power supply to DC power, a voltage conversion circuit configured to convert a voltage of DC power supplied from a first power storage battery to a specified voltage, a discharge plug connection detection circuit configured to detect whether a discharge plug is electrically connected to the first power storage battery, a first control circuit configured to control operation of the power conversion circuit and the voltage conversion circuit so that the DC power output from the power conversion circuit and DC power output from the voltage conversion circuit are supplied to a second power storage battery during rapid charging of the second power storage battery, the first control circuit being configured to allow the first power storage battery to be discharged when the discharge plug connection detection circuit detects that the discharge plug is electrically connected to the first power storage battery, and a second control circuit configured to control a detection state of the discharge plug connection detection circuit. The second control circuit causes the discharge plug connection detection circuit to detect that the discharge plug is electrically connected to the first power storage battery during the rapid charging of the second power storage battery.

In accordance with a third aspect of the present invention, there is provided a charger including a power conversion circuit configured to convert AC power supplied from an AC power supply to DC power, a voltage conversion circuit configured to convert a voltage of DC power supplied from a first power storage battery to a specified voltage, a charge plug connection detection circuit configured to detect whether a charge plug is electrically connected to the first power storage battery, a first control circuit configured to control operation of the power conversion circuit so that the DC power output from the power conversion circuit is supplied to a second power storage battery during charging of the second power storage battery, the first control circuit being configured to allow the first power storage battery to be charged when the charge plug connection detection circuit detects that the charge plug is electrically connected to the first power storage battery, and a second control circuit configured to control a detection state of the charge plug connection detection circuit. The second control circuit causes the charge plug connection detection circuit to detect that the charge plug is electrically connected to the first power storage battery during charging of the first power storage battery.

Other aspects and advantages of the invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the embodiments together with the accompanying drawings in which:
FIG. 1 is a diagram illustrating an example of a charger according to a first embodiment;
FIG. 2 is a flowchart showing operation of a first control circuit according to the first embodiment;
FIG. 3 is a sequence diagram showing the operation of the first control circuit and operation of a power storage battery;
FIG. 4 is a flowchart showing operation of a second control circuit according to the first embodiment;
FIG. 5 is an example of a charger according to a second embodiment;
FIG. 6 is a flowchart showing operation of a second control circuit according to the second embodiment;
FIG. 7 is a diagram illustrating an example of a charger according to a third embodiment;
FIG. 8 is a flowchart showing operation of a second control circuit according to the third embodiment;
FIG. 9 is a diagram illustrating an example of a charger according to a fourth embodiment; and
FIG. 10 is a flowchart showing operation of a second control circuit according to the fourth embodiment.

### DETAILED DESCRIPTION OF THE EMBODIMENTS

The following will describe embodiments according to the present invention in detail with reference to the drawings.

### <First embodiment>

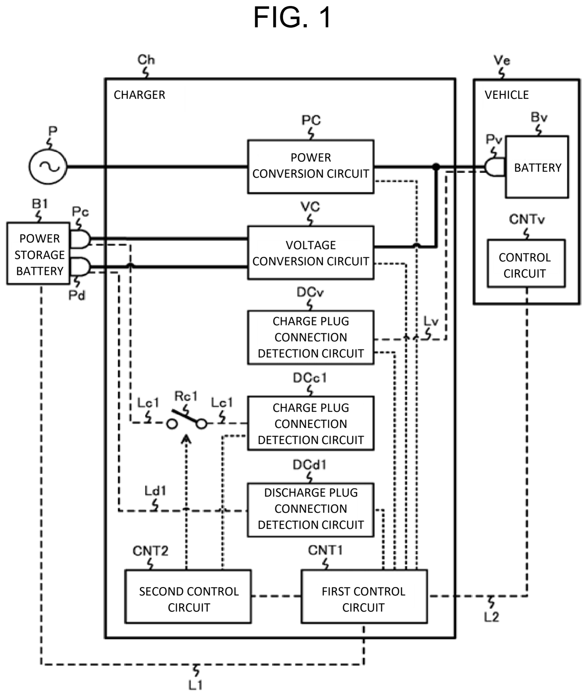

FIG. 1 is a diagram illustrating an example of a charger according to a first embodiment.

For example, during normal charging of a battery Bv (second power storage battery) mounted on a vehicle Ve, such as an industrial vehicle or an electric vehicle, a charger Ch illustrated in FIG. 1 converts AC power output from an AC power supply P, such as a commercial power supply, to DC power and supplies the converted DC power to the battery Bv. During rapid charging of the battery Bv, the charger Ch supplies not only power output from the AC power supply P but also power output from a power storage battery B1 (first power storage battery) to the battery Bv. During charging of the power storage battery B1, the charger Ch supplies power output from the AC power supply P to the power storage battery B1. Each of the battery Bv and the power storage battery B1 is a secondary battery that is capable of being charged and discharged, such as a lithium-ion secondary battery, a nickel-metal hydride battery, or a lead-acid battery. The power storage battery B1 may be provided inside the charger Ch. The charger Ch includes a first control circuit CNT1 that communicates with the power storage battery B1 through a communication line L1 and that communicates with a control board inside the battery Bv or a control circuit CNTv formed on a control board in the vehicle Ve through a communication line L2.

The charger Ch includes a power conversion circuit PC, a voltage conversion circuit VC, a charge plug connection detection circuit DCv, a discharge plug connection detection circuit DCd1, a charge plug connection relay Rc1, a charge plug connection detection circuit DCc1, the first control circuit CNT1, and a second control circuit CNT2.

In the first embodiment, when the normal charging or the rapid charging of the battery Bv starts, a charge plug Pv is plugged into the battery Bv and a discharge plug Pd is plugged into the power storage battery B1 by the user. In the first embodiment, when the charging of the power storage battery B1 starts, the charge plug Pv is unplugged from the battery Bv and the discharge plug Pd is unplugged from the power storage battery B1. In the first embodiment, a charge plug Pc is plugged into the power storage battery B1 at all times (during the normal charging of the battery Bv, the rapid charging of the battery Bv, and the charging of the power storage battery B1). That is, in the first embodiment, when the charging of the power storage battery B1 starts, the user does not need to plug the charge plug Pc into the power storage battery B1. Thus, in the first embodiment, work of plugging the charge plug Pc by the user is omitted when the charging of the power storage battery B1 starts, so that an increase in a user's workload is suppressed.

The power conversion circuit PC converts AC power output from the AC power supply P to DC power and supplies the converted DC power to the battery Bv through the charge plug Pv during the normal charging or the rapid charging of the battery Bv. In addition, the power conversion circuit PC converts AC power output from the AC power supply P to DC power and supplies the converted DC power to the voltage conversion circuit VC during the charging of the power storage battery B1.

During the rapid charging of the battery Bv, the voltage conversion circuit VC converts a voltage of DC power input from the power storage battery B1 through the discharge plug Pd to a specified voltage and applies the converted voltage to the battery Bv through the charge plug Pv. During the charging of the power storage battery B1, the voltage conversion circuit VC converts a voltage of DC power output from the power conversion circuit PC to a specified voltage and applies the converted voltage to the power storage battery B1 through the charge plug Pc.

The charge plug connection detection circuit DCv is implemented as an integrated circuit (IC), for example. The charge plug connection detection circuit DCv detects whether the charge plug Pv is connected to the battery Bv based on a voltage applied to a connection detection line Lv, or the like, and sends a detection result to the first control circuit CNT1.

The discharge plug connection detection circuit DCd1 is implemented as an IC, for example. The discharge plug connection detection circuit DCd1 detects whether the discharge plug Pd is connected to the power storage battery B1 based on a voltage applied to a connection detection line Ld1, or the like, and sends a detection result to the first control circuit CNT1.

The charge plug connection relay Rc1 is, for example, implemented as a mechanical relay or a semiconductor relay, such as a metal oxide semiconductor field-effect transistor (MOSFET), and is provided on a connection detection line Lc1 between the charge plug Pc and the charge plug connection detection circuit DCc1. The charge plug connection relay Rc1 is controlled by the second control circuit CNT2 so as to be set in an open state or a closed state. When the charge plug connection relay Rc1 is in the open state, the charge plug Pc is electrically disconnected from the charge plug connection detection circuit DCc1, and a voltage applied to the connection detection line Lc1 between the charge plug connection detection circuit DCc1 and the charge plug connection relay Rc1 is a voltage Vc1L. When the charge plug connection relay Rc1 is in the closed state, the charge plug Pc is electrically connected to the charge plug connection detection circuit DCc1, and the voltage applied to the connection detection line Lc1 between the charge plug connection detection circuit DCc1 and the charge plug connection relay Rc1 is a voltage Vc1H greater than the voltage Vc1L.

The charge plug connection detection circuit DCc1 is implemented as an IC, for example. The charge plug connection detection circuit DCc1 detects whether the charge plug Pc is electrically connected to the power storage battery B1 based on the voltage applied to the connection detection line Lc1 between the charge plug connection detection circuit DCc1 and the charge plug connection relay Rc1, and sends a detection result to the second control circuit CNT2. For example, when the voltage applied to the connection detection line Lc1 between the charge plug connection detection circuit DCc1 and the charge plug Pc is the voltage Vc1L, the charge plug connection detection circuit DCc1 detects that the charge plug Pc is not electrically connected to the power storage battery B1. On the other hand, when the voltage applied to the connection detection line Lc1 between the charge plug connection detection circuit DCc1 and the charge plug Pc is the voltage Vc1H, the charge plug connection detection circuit DCc1 detects that the charge plug Pc is electrically connected to the power storage battery B1.

The first control circuit CNT1 is, for example, implemented as a processor or a programmable device, such as a field programmable gate array (FPGA) or a programmable logic device (PLD). The first control circuit CNT1 controls operation of the power conversion circuit PC and the voltage conversion circuit VC.

For example, in a state where at least the charge plug Pv is connected to the battery Bv during the normal charging of the battery Bv, the first control circuit CNT1 controls the operation of the power conversion circuit PC so that a current flowing from the power conversion circuit PC to the battery Bv follows a current command value determined based on a charging specification αv of the battery Bv. For example, the charging specification αv includes a current capacity and a voltage of the battery Bv during the normal charging or the rapid charging of the battery Bv.

In a state where the charge plug Pv is connected to the battery Bv, the charge plug Pc is not electrically connected to the power storage battery B1, and the discharge plug Pd is connected to the power storage battery B1 during the rapid charging of the battery Bv, the first control circuit CNT1 controls the operation of the power conversion circuit PC and the voltage conversion circuit VC so that a total current of a current flowing from the power conversion circuit PC to the battery Bv and a current flowing from the voltage conversion circuit VC to the battery Bv follows a current command value determined based on the charging specification αv of the battery Bv and a discharging specification αd of the power storage battery B1. For example, the discharging specification αd includes a current capacity and a voltage of the power storage battery B1 during discharging of the power storage battery B1.

Also, in a state where the charge plug Pv is not connected to the battery Bv, the charge plug Pc is electrically connected to the power storage battery B1, and the discharge plug Pd is not connected to the power storage battery B1 during the charging of the power storage battery B1, the first control circuit CNT1 controls the operation of the power conversion circuit PC and the voltage conversion circuit VC so that a current flowing from the power conversion circuit PC to the power storage battery B1 through the voltage conversion circuit VC follows a current command value determined based on a charging specification αc of the power storage battery B1. For example, the charging specification αc includes a current capacity and a voltage of the power storage battery B1 during the charging of the power storage battery B1.

The second control circuit CNT2 is, for example, implemented as a processor or programmable device. The second control circuit CNT2 controls operation of the charge plug connection relay Rc1. The second control circuit CNT2 causes the charge plug connection detection circuit DCc1 to detect that the charge plug Pc is connected to the power storage battery B1 during the charging of the power storage battery B1 by controlling the operation of the charge plug connection relay Rc1.

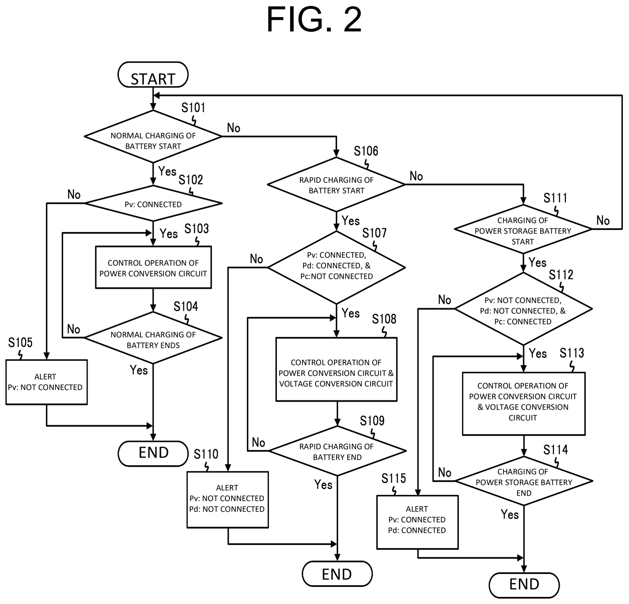

Here, FIG. 2 is a flowchart showing the operation of the first control circuit CNT1.

First, when the normal charging of the battery Bv starts (YES in Step S101), the first control circuit CNT1 determines whether at least the charge plug Pv is connected to the battery Bv (in Step S102). For example, in Step S101, when the first control circuit CNT1 receives a normal charging instruction for charging the battery Bv from the control board inside the battery Bv or the control circuit CNTv formed on the control board in the vehicle Ve, the first control circuit CNT1 starts the normal charging of the battery Bv and sends the normal charging instruction for the battery Bv to the second control circuit CNT2. In Step S102, when the first control circuit CNT1 receives a detection result that the charge plug Pv is connected to the battery Bv from the charge plug connection detection circuit DCv, the first control circuit CNT1 determines that the charge plug Pv is connected to the battery Bv. On the other hand, when the first control circuit CNT1 receives a detection result that the charge plug Pv is not connected to the battery Bv from the charge plug connection detection circuit DCv, the first control circuit CNT1 determines that the charge plug Pv is not connected to the battery Bv.

Next, when the first control circuit CNT1 determines that the charge plug Pv is connected to the battery Bv (YES in Step S102), the first control circuit CNT1 controls the operation of the power conversion circuit PC until an end of the normal charging of the battery Bv (in Steps S103 and S104). For example, in Step S103, the first control circuit CNT1 controls the operation of the power conversion circuit PC so that a current flowing from the charger Ch to the battery Bv follows a current command value that is sent from the control circuit CNTv. In Step S104, when the first control circuit CNT1 receives the current command value reaching zero or a charging end instruction, which is sent from the control circuit CNTv, the first control circuit CNT1 ends the normal charging of the battery Bv.

On the other hand, when the first control circuit CNT1 determines that the charge plug Pv is not connected to the battery Bv (NO in Step S102), the first control circuit CNT1 alerts the user that the charge plug Pv is not connected to the battery Bv, using a display, a speaker, or the like (in Step S105).

When the rapid charging of the battery Bv starts (NO in Step S101 and YES in Step S106), the first control circuit CNT1 determines whether the following conditions are all satisfied: (i) the charge plug Pv is connected to the battery Bv; (ii) the discharge plug Pd is connected to the power storage battery B1; and (iii) the charge plug Pc is not electrically connected to the power storage battery B1 (in Step S107). For example, in Step S106, when the first control circuit CNT1 receives a rapid charging instruction for the battery Bv from the control board inside the battery Bv or the control circuit CNTv in the vehicle Ve, the first control circuit CNT1 starts the rapid charging of the battery Bv and sends the rapid charging instruction for the battery Bv to the second control circuit CNT2. In Step S107, when the first control circuit CNT1 receives a detection result that the discharge plug Pd is connected to the power storage battery B1 from the discharge plug connection detection circuit DCd1, the first control circuit CNT1 determines that the discharge plug Pd is connected to the power storage battery B1. On the other hand, when the first control circuit CNT1 receives a detection result that the discharge plug Pd is not connected to the power storage battery B1 from the discharge plug connection detection circuit DCd1, the first control circuit CNT1 determines that the discharge plug Pd is not connected to the power storage battery B1. In Step S107, when the first control circuit CNT1 receives a detection result that the charge plug Pc is electrically connected to the power storage battery B1 from the second control circuit CNT2, the first control circuit CNT1 determines that the charge plug Pc is electrically connected to the power storage battery B1. On the other hand, when the first control circuit CNT1 receives a detection result that the charge plug Pc is not electrically connected to the power storage battery B1 from the second control circuit CNT2, the first control circuit CNT1 determines that the charge plug Pc is not electrically connected to the power storage battery B1.

Next, when the first control circuit CNT1 determines that the following conditions are all satisfied: (i) the charge plug Pv is connected to the battery Bv; (ii) the discharge plug Pd is connected to the power storage battery B1; and (iii) the charge plug Pc is not electrically connected to the power storage battery B1 (YES in Step S107), the first control circuit CNT1 controls the operation of the power conversion circuit PC and the voltage conversion circuit VC until an end of the rapid charging of the battery Bv (in Steps S108 and S109). For example, in Step S108, the first control circuit CNT1 obtains communication protocol of the power storage battery B1 that is sent from the second control circuit CNT2, and further obtains the discharging specification αd of the power storage battery B1 (such as the current capacity and the voltage of the power storage battery B1) based on the communication protocol. Then, the first control circuit CNT1 controls the operation of the power conversion circuit PC and the voltage conversion circuit VC so that power based on the obtained discharging specification αd and the current command value that is sent from the control circuit CNTv is supplied from the charger Ch to the battery Bv. In Step S109, when the first control circuit CNT1 receives the current command value reaching zero or a charging end instruction, which is sent from the control circuit CNTv, the first control circuit CNT1 ends the rapid charging of the battery Bv.

On the other hand, when the first control circuit CNT1 determines that the charge plug Pv is not connected to the battery Bv or determines that the discharge plug Pd is not connected to the power storage battery B1 (NO in Step S107), the first control circuit CNT1 alerts the user that the charge plug Pv is not connected to the battery Bv or that the discharge plug Pd is not connected to the power storage battery B1, using the display, the speaker, or the like (Step S110). It is noted that in Step S110, the first control circuit CNT1 may alert the user that the rapid charging of the battery Bv cannot be performed.

When the charging of the power storage battery B1 starts (NO in Step S101, NO in Step S106, and YES in Step S111), the first control circuit CNT1 determines whether the following conditions are all satisfied: (i) the charge plug Pv is not connected to the battery Bv; (ii) the discharge plug Pd is not connected to the power storage battery B1; and (iii) the charge plug Pc is electrically connected to the power storage battery B1 (in Step S112). For example, in step S111, after the vehicle Ve stops operating, when a state of charge (a ratio of a current charge capacity to a full charge capacity) in the power storage battery B1 is equal to or lower than an initial state of charge, the first control circuit CNT1 starts the charging of the power storage battery B1 and sends a charging instruction for the power storage battery B1 to the second control circuit CNT2.

Next, when the first control circuit CNT1 determines that the following conditions are all satisfied: (i) the charge plug Pv is not connected to the battery Bv; (ii) the discharge plug Pd is not connected to the power storage battery B1; and (iii) the charge plug Pc is electrically connected to the power storage battery B1 (YES in Step S112), the first control circuit CNT1 controls the operation of the power conversion circuit PC and the voltage conversion circuit VC until an end of the charging of the power storage battery B1 (in Steps S113 and S114). For example, in Step S113, the first control circuit CNT1 obtains communication protocol of the power storage battery B1 that is sent from the second control circuit CNT2, and further obtains the charging specification αc of the power storage battery B1 (such as the current capacity and the voltage of the power storage battery B1) based on the communication protocol. Then, the first control circuit CNT1 controls the operation of the power conversion circuit PC and the voltage conversion circuit VC so that power based on the obtained charging specification αc is supplied from the charger Ch to the power storage battery B1. In Step S114, when the state of charge in the power storage battery B1 becomes equal to or higher than a final state of charge, the first control circuit CNT1 ends the charging of the power storage battery B1.

On the other hand, when the first control circuit CNT1 determines that the charge plug Pv is connected to the battery Bv or the discharge plug Pd is connected to the power storage battery B1 (NO in Step S112), the first control circuit CNT1 alerts the user that the charge plug Pv is connected to the battery Bv or that the discharge plug Pd is connected to the power storage battery B1, using the display, the speaker, or the like (Step S115).

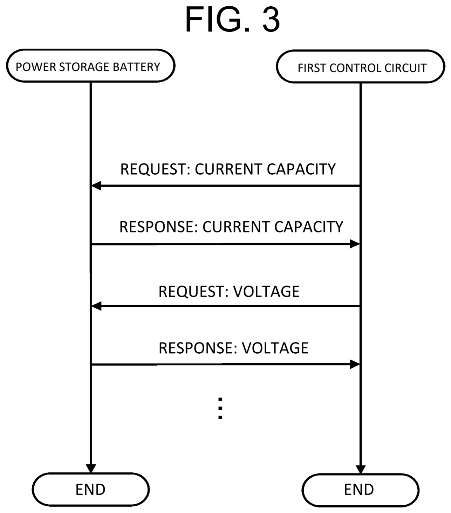

FIG. 3 is a sequence diagram showing operation of each of the first control circuit CNT1 and the power storage battery B1 after communication therebetween is established during the charging of the power storage battery B1.

First, the first control circuit CNT1 establishes the communication between the first control circuit CNT1 and the power storage battery B1 based on the communication protocol that is sent from the second control circuit CNT2, and then, sends a request for the current capacity to the power storage battery B1.

Next, the power storage battery B1 returns a response for the current capacity to the first control circuit CNT1.

Next, when the first control circuit CNT1 receives the response for the current capacity, the first control circuit CNT1 sends a request for the voltage of the power storage battery B1 to the power storage battery B1.

Then, the power storage battery B1 returns a response for the voltage of the power storage battery B1 to the first control circuit CNT1.

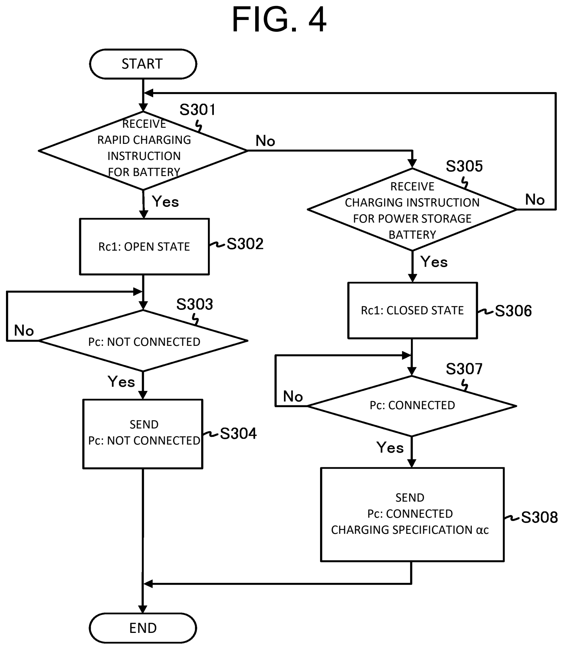

FIG. 4 is a flowchart showing operation of the second control circuit CNT2 according to the first embodiment.

First, when the second control circuit CNT2 receives the rapid charging instruction for the battery Bv from the first control circuit CNT1 (YES in Step S301), the second control circuit CNT2 sets the charge plug connection relay Rc1 in the open state (in Step S302).

Next, when the second control circuit CNT2 receives the detection result that the charge plug Pc is not electrically connected to the power storage battery B1 from the charge plug connection detection circuit DCc1 (YES in Step S303), the second control circuit CNT2 sends the detection result to the first control circuit CNT1 (in Step S304).

When the second control circuit CNT2 receives the charging instruction for the power storage battery B1 from the first control circuit CNT1 (YES in Step S305), the second control circuit CNT2 sets the charge plug connection relay Rc1 in the closed state (in Step S306).

Next, when the second control circuit CNT2 receives a detection result that the charge plug Pc is electrically connected to the power storage battery B1 from the charge plug connection detection circuit DCc1 (YES in Step S307), the second control circuit CNT2 sends the detection result and the charging specification αc of the power storage battery B1 to the first control circuit CNT1 (in Step S308).

Thus, in the state where the charge plug Pc is plugged into the power storage battery B1 at all times, the charge plug Pc may be set not to be electrically connected to the power storage battery B1 during the rapid charging of the battery Bv and the charge plug Pc may be set to be electrically connected to the power storage battery B1 during the charging of the power storage battery B1, so that the handling of the charge plug Pc by the user is omitted.

### <Second embodiment>

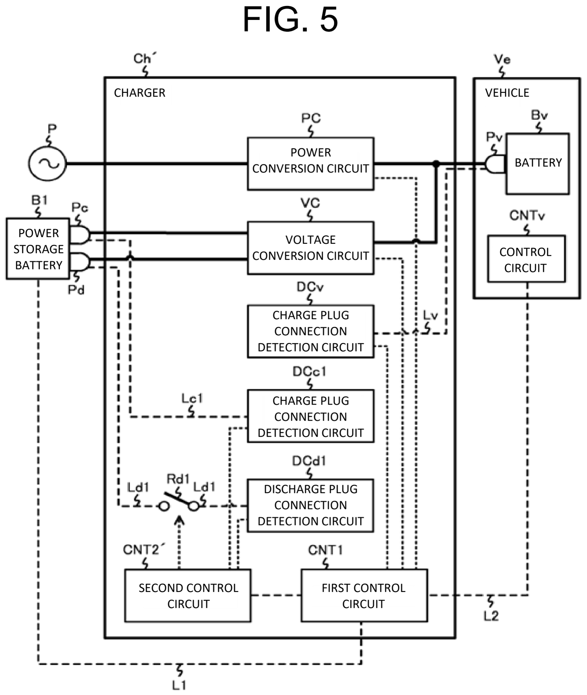

FIG. 5 is a diagram illustrating an example of a charger Ch' according to a second embodiment. It is noted that in components illustrated in FIG. 5, the same components as those illustrated in FIG. 1 have the same reference numerals and the description thereof is omitted.

The charger Ch' illustrated in FIG. 5 is different from the charger Ch illustrated in FIG. 1 in that the charger Ch' includes a discharge plug connection relay Rd1 instead of the charge plug connection relay Rc1. In the second embodiment, when the normal charging of the battery Bv starts, the charge plug Pv is plugged into the battery Bv by the user. Also in the second embodiment, when the rapid charging of the battery Bv starts, the charge plug Pv is plugged into the battery Bv and the charge plug Pc is unplugged from the power storage battery B1 by the user. Also in the second embodiment, when the charging of the power storage battery B1 starts, the charge plug Pv is unplugged from the battery Bv and the charge plug Pc is plugged into the power storage battery B1 by the user. Also in the second embodiment, the discharge plug Pd is plugged into the power storage battery B1 at all times (during the normal charging of the battery Bv, the rapid charging of the battery Bv, and the charging of the power storage battery B1). That is, in the second embodiment, when the rapid charging of the battery Bv starts, the user does not need to plug the discharge plug Pd into the power storage battery B1. Also in the second embodiment, when the charging of the power storage battery B1 starts, the user does not need to unplug the discharge plug Pd from the power storage battery B1. Thus, in the second embodiment, work of plugging the discharge plug Pd by the user is omitted when the rapid charging of the battery Bv or the charging of the power storage battery B1 starts, so that an increase in a user's workload is suppressed.

The discharge plug connection relay Rd1 is, for example, implemented as a mechanical relay or a semiconductor relay, such as a MOSFET, and is provided on the connection detection line Ld1 between the discharge plug Pd and the discharge plug connection detection circuit DCd1. In addition, the discharge plug connection relay Rd1 is controlled by the second control circuit CNT2' so as to be set in an open state or a closed state. When the discharge plug connection relay Rd1 is in the open state, the discharge plug Pd is electrically disconnected from the discharge plug connection detection circuit DCd1, and a voltage applied to the connection detection line Ld1 between the discharge plug connection detection circuit DCd1 and the discharge plug connection relay Rd1 is a voltage Vd1L. When the discharge plug connection relay Rd1 is in the closed state, the discharge plug Pd is electrically connected to the discharge plug connection detection circuit DCd1, and the voltage applied to the connection detection line Ld1 between the discharge plug connection detection circuit DCd1 and the discharge plug connection relay Rd1 is a voltage Vd1H greater than the voltage Vd1L.

The discharge plug connection detection circuit DCd1 in the second embodiment is implemented as an IC, for example. The discharge plug connection detection circuit DCd1 detects whether the discharge plug Pd is electrically connected to the power storage battery B1 based on the voltage applied to the connection detection line Ld1 between the discharge plug connection detection circuit DCd1 and the discharge plug connection relay Rd1, and sends a detection result to the second control circuit CNT2'. For example, when the voltage applied to the connection detection line Ld1 between the discharge plug connection detection circuit DCd1 and the discharge plug connection relay Rd1 is the voltage Vd1L, the discharge plug connection detection circuit DCd1 detects that the discharge plug Pd is not electrically connected to the power storage battery B1. On the other hand, when the voltage applied to the connection detection line Ld1 between the discharge plug connection detection circuit DCd1 and the discharge plug connection relay Rd1 is the voltage Vd1H, the discharge plug connection detection circuit DCd1 detects that the discharge plug Pd is electrically connected to the power storage battery B1.

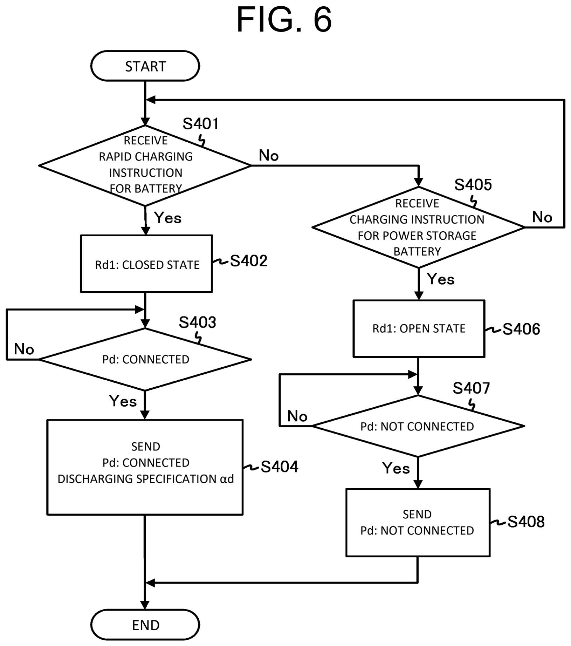

FIG. 6 is a flowchart showing operation of the second control circuit CNT2' according to the second embodiment.

First, when the second control circuit CNT2' receives the rapid charging instruction for the battery Bv (YES in Step S401), the second control circuit CNT2' sets the discharge plug connection relay Rd1 in the closed state (in Step S402).

Next, when the second control circuit CNT2' receives the detection result that the discharge plug Pd is electrically connected to the power storage battery B1 from the discharge plug connection detection circuit DCd1 (YES in Step S403), the second control circuit CNT2' sends the detection result and the discharging specification αd of the power storage battery B1 to the first control circuit CNT1 (in Step S404).

In addition, the second control circuit CNT2' receives the charging instruction for the power storage battery B1 (YES in Step S405), the second control circuit CNT2' sets the discharge plug connection relay Rd1 in the open state (in Step S406).

Next, when the second control circuit CNT2' receives the detection result that the discharge plug Pd is not electrically connected to the power storage battery B1 from the discharge plug connection detection circuit DCd1 (YES in Step S407), the second control circuit CNT2' sends the detection result to the first control circuit CNT1 (in Step S408).

Thus, in the state where the discharge plug Pd is plugged into the power storage battery B1 at all times, the discharge plug Pd is set to be electrically connected to the power storage battery B1 during the rapid charging of the battery Bv and the discharge plug Pd is set not to be electrically connected to the power storage battery B1 during the charging of the power storage battery B1, so that the handling of the discharge plug Pd by the user is omitted.

### <Third embodiment>

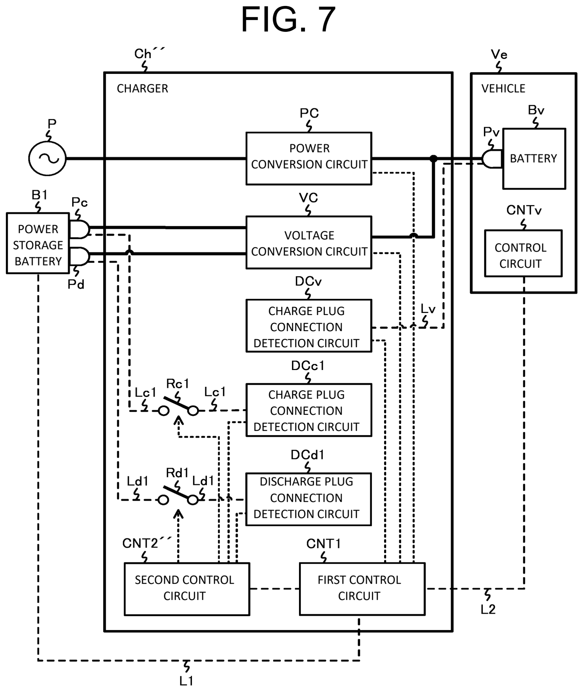

FIG. 7 is a diagram illustrating an example of a charger Ch" according to a third embodiment. It is noted that in components illustrated in FIG. 7, the same components as those illustrated in FIGS. 1 and 5 have the same reference numerals and the description thereof is omitted.

The charger Ch" illustrated in FIG. 7 is different from the charger Ch and the charger Ch' illustrated in FIGS. 1 and 5 in that the charger Ch" includes both the charge plug connection relay Rc1 and the discharge plug connection relay Rd1. In the third embodiment, when the normal charging or the rapid charging of the battery Bv starts, the charge plug Pv is plugged into the battery Bv by the user. Also in the third embodiment, when the charging of the power storage battery B1 starts, the charge plug Pv is unplugged from the battery Bv by the user. Also in the third embodiment, the charge plug Pc and the discharge plug Pd are plugged into the power storage battery B1 at all times (during the normal charging of the battery Bv, the rapid charging of the battery Bv, and the charging of the power storage battery B1). That is, in the third embodiment, when the rapid charging of the battery Bv starts, the user does not need to unplug the charge plug Pc from the power storage battery B1 and to plug the discharge plug Pd into the power storage battery B1. Furthermore, in the third embodiment, when the charging of the power storage battery B1 starts, the user does not need to plug the charge plug Pc into the power storage battery B1 or to unplug the discharge plug Pd from the power storage battery B1. Thus, in the third embodiment, the user does not handle the charge plug Pc or the discharge plug Pd when the rapid charging of the battery Bv or the charging of the power storage battery B1 starts, so that an increase in a user's workload is suppressed.

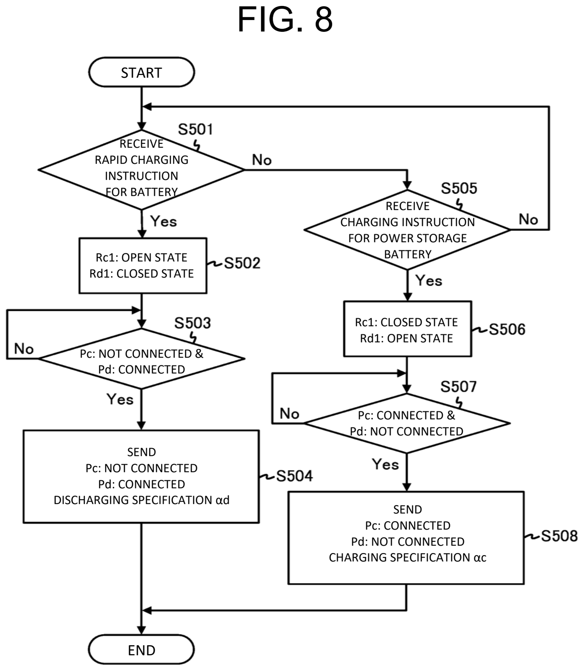

FIG. 8 is a flowchart showing operation of a second control circuit CNT2" according to the third embodiment.

First, when the second control circuit CNT2" receives the rapid charging instruction for the battery Bv (YES in Step S501), the second control circuit CNT2" sets the charge plug connection relay Rc1 in the open state and sets the discharge plug connection relay Rd1 in the closed state (in Step S502).

Next, when the second control circuit CNT2" receives the detection result that the charge plug Pc is not electrically connected to the power storage battery B1 from the charge plug connection detection circuit DCc1 and the detection result that the discharge plug Pd is electrically connected to the power storage battery B1 from the discharge plug connection detection circuit DCd1 (YES in Step S503), the second control circuit CNT2" sends the detection results and the discharging specification αd of the power storage battery B1 to the first control circuit CNT1 (in Step S504).

When the second control circuit CNT2" receives the charging instruction for the power storage battery B1 (YES in Step S505), the second control circuit CNT2" sets the charge plug connection relay Rc1 in the closed state and sets the discharge plug connection relay Rd1 in the open state (in Step S506).

Next, when the second control circuit CNT2" receives the detection result that the charge plug Pc is electrically connected to the power storage battery B1 from the charge plug connection detection circuit DCc1 and the detection result that the discharge plug Pd is not electrically connected to the power storage battery B1 from the discharge plug connection detection circuit DCd1 (YES in Step S507), the second control circuit CNT2" sends the detection results and the charging specification αc of the power storage battery B1 to the first control circuit CNT1 (in Step S508).

Thus, in the state where the charge plug Pc and the discharge plug Pd are plugged into the power storage battery B1 at all times, the charge plug Pc is set not to be electrically connected to the power storage battery B1 and the discharge plug Pd is set to be electrically connected to the power storage battery B1 during the rapid charging of the battery Bv, as well as the charge plug Pc is set to be electrically connected to the power storage battery B1 and the discharge plug Pd is set not to be electrically connected to the power storage battery B1 during the charging of the power storage battery B1. As a result, the handling of the charge plug Pc and the discharge plug Pd by the user is omitted.

### <Fourth embodiment>

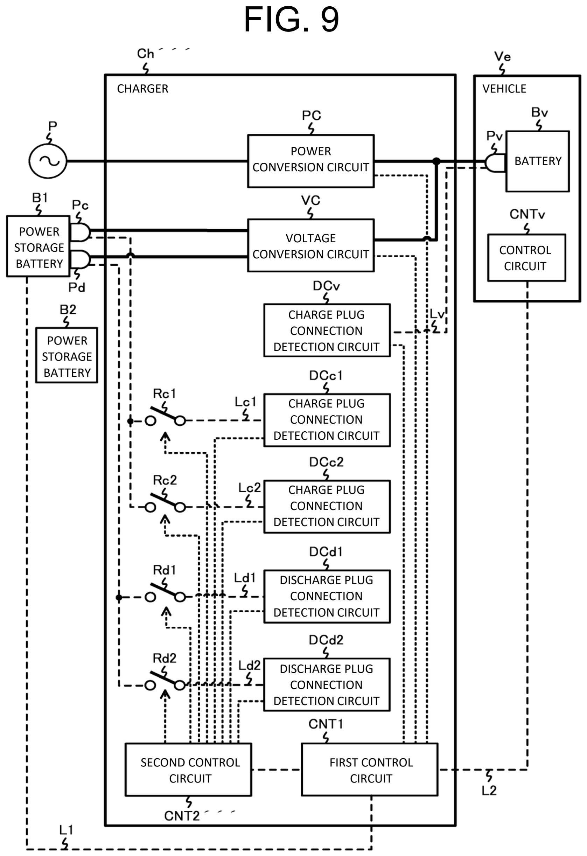

FIG. 9 is a diagram illustrating an example of a charger Ch‴ according to a fourth embodiment. It is noted that in components illustrated in FIG. 9, the same components as those illustrated in FIG. 7 have the same reference numerals and the description thereof is omitted.

The charger Ch‴ illustrated in FIG. 9 is different from the charger Ch" illustrated in FIG. 7 in that the charger Ch‴ further includes a charge plug connection detection circuit DCc2, a charge plug connection relay Rc2, a discharge plug connection detection circuit DCd2, and a discharge plug connection relay Rd2. When the charge plug connection detection circuit DCc1 and the charge plug connection detection circuit DCc2 are not distinguished from each other, each of them is simply referred to as a charge plug connection detection circuit DCc. When the charge plug connection relay Rc1 and the charge plug connection relay Rc2 are not distinguished from each other, each of them is simply referred to as a charge plug connection relay Rc. When the discharge plug connection detection circuit DCd1 and the discharge plug connection detection circuit DCd2 are not distinguished from each other, each of them is simply referred to as a discharge plug connection detection circuit DCd. When the discharge plug connection relay Rd1 and the discharge plug connection relay Rd2 are not distinguished from each other, each of them is simply referred to as a discharge plug connection relay Rd. When the connection detection line Lc1 and a connection detection line Lc2 are not distinguished from each other, each of them is simply referred to as a connection detection line Lc. When the connection detection line Ld1 and a connection detection line Ld2 are not distinguished from each other, each of them is simply referred to as a connection detection line Ld.

In the fourth embodiment, one of the power storage battery B1 and a power storage battery B2 is connected to the charger Ch‴. The charging specification βc and the discharging specification βd of the power storage battery B2 are different from the charging specification αc and the discharging specification αd of the power storage battery B1, respectively. When the power storage battery B1 and the power storage battery B2 are not distinguished from each other, each of them is simply referred to as a power storage battery B.

The charger Ch‴ illustrated in FIG. 9 includes the two charge plug connection relays Rc and the two discharge plug connection relays Rd; however, the charger Ch‴ may include three or more charge plug connection relays Rc and three or more discharge plug connection relays Rd in correspondence with the number of the power storage batteries B to be connected to the charger Ch"'. In the fourth embodiment, similarly to the third embodiment, when the normal charging or the rapid charging of the battery Bv starts, the charge plug Pv is plugged into the battery Bv by the user. Also in the fourth embodiment, similarly to the third embodiment, when the charging of the power storage battery B starts, the charge plug Pv is unplugged from the battery Bv by the user.

In the fourth embodiment, similarly to the third embodiment, the charge plug Pc and the discharge plug Pd are plugged into the power storage battery B1 or the power storage battery B2 at all times (during the normal charging of the battery Bv, the rapid charging of the battery Bv, and the charging of the power storage battery B). That is, in the fourth embodiment, when the rapid charging of the battery Bv starts, the user does not need to unplug the charge plug Pc from the power storage battery B or to plug the discharge plug Pd into the power storage battery B. In the fourth embodiment, when the charging of the power storage battery B starts, the user does not need to plug the charge plug Pc into the power storage battery B or to unplug the discharge plug Pd from the power storage battery B. Thus, in the fourth embodiment, the user does not handle the charge plug Pc or the discharge plug Pd when the rapid charging of the battery Bv or the charging of the power storage battery B starts, so that an increase in the user's workload is suppressed.

The charge plug connection relay Rc2 is, for example, implemented as a mechanical relay or a semiconductor relay, such as a MOSFET, and is provided on a connection detection line Lc2 between the charge plug Pc and the charge plug connection detection circuit DCc2. The charge plug connection relay Rc2 is controlled by the second control circuit CNT2‴ so as to be set in an open state or a closed state. When the charge plug connection relay Rc2 is in the open state, the charge plug Pc is electrically disconnected from the charge plug connection detection circuit DCc2, and a voltage applied to the connection detection line Lc2 between the charge plug connection detection circuit DCc2 and the charge plug connection relay Rc2 is a voltage Vc2L. When the charge plug connection relay Rc2 is in the closed state, the charge plug Pc is electrically connected to the charge plug connection detection circuit DCc2, and a voltage applied to the connection detection line Lc2 between the charge plug connection detection circuit DCc2 and the charge plug connection relay Rc2 is a voltage Vc2H greater than the voltage Vc2L.

The charge plug connection detection circuit DCc2 is implemented as an IC, for example. The charge plug connection detection circuit DCc2 detects whether the charge plug Pc is electrically connected to the power storage battery B2 based on the voltage applied to the connection detection line Lc2 between the charge plug connection detection circuit DCc2 and the charge plug connection relay Rc2, and sends a detection result to the second control circuit CNT2‴. For example, when the voltage applied to the connection detection line Lc2 between the charge plug connection detection circuit DCc2 and the charge plug connection relay Rc2 is the voltage Vc2L, the charge plug connection detection circuit DCc2 detects that the charge plug Pc is not electrically connected to the power storage battery B2. On the other hand, when the voltage applied to the connection detection line Lc2 between the charge plug connection detection circuit DCc2 and the charge plug connection relay Rc2 is the voltage Vc2H, the charge plug connection detection circuit DCc2 detects that the charge plug Pc is electrically connected to the power storage battery B2.

The discharge plug connection relay Rd2 is, for example, a mechanical relay or a semiconductor relay, such as a MOSFET, and is provided on a connection detection line Ld2 between the discharge plug Pd and the discharge plug connection detection circuit DCd2. The discharge plug connection relay Rd2 is controlled by the second control circuit CNT2‴ so as to be set in an open state or a closed state. When the discharge plug connection relay Rd2 is in the open state, the discharge plug Pd is electrically disconnected from the discharge plug connection detection circuit DCd2, and a voltage applied to the connection detection line Ld2 between the discharge plug connection detection circuit DCd2 and the discharge plug connection relay Rd2 is a voltage Vd2L. When the discharge plug connection relay Rd2 is in the closed state, the discharge plug Pd is electrically connected to the discharge plug connection detection circuit DCd2, and the voltage applied to the connection detection line Ld2 between the discharge plug connection detection circuit DCd2 and the discharge plug connection relay Rd2 is a voltage Vd2H greater than the voltage Vd2L.

The discharge plug connection detection circuit DCd2 is implemented as an IC, for example. The discharge plug connection detection circuit DCd2 detects whether the discharge plug Pd is electrically connected to the power storage battery B2 based on the voltage applied to the connection detection line Ld2 between the discharge plug connection detection circuit DCd2 and the discharge plug connection relay Rd2, and sends a detection result to the second control circuit CNT2‴. For example, when the voltage applied to the connection detection line Ld2 between the discharge plug connection detection circuit DCd2 and the discharge plug connection relay Rd2 is the voltage Vd2L, the discharge plug connection detection circuit DCd2 detects that the discharge plug Pd is not electrically connected to the power storage battery B2. On the other hand, when the voltage applied to the connection detection line Ld2 between the discharge plug connection detection circuit DCd2 and the discharge plug connection relay Rd2 is the voltage Vd2H, the discharge plug connection detection circuit DCd2 detects that the discharge plug Pd is electrically connected to the power storage battery B2.

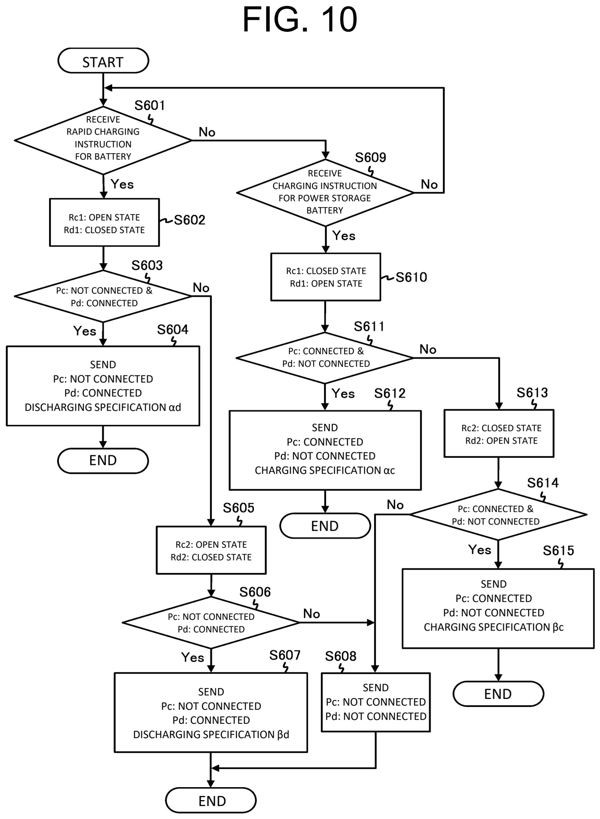

FIG. 10 is a flowchart showing operation of the second control circuit CNT2‴ according to the fourth embodiment.

First, when the second control circuit CNT2‴ receives the rapid charging instruction for the battery Bv (YES in Step S601), the second control circuit CNT2‴ sets the charge plug connection relay Rc1 in the open state and sets the discharge plug connection relay Rd1 in the closed state (in Step S602). In Step S602, the second control circuit CNT2‴ sets the charge plug connection relay Rc2 and the discharge plug connection relay Rd2 in the open state.

Next, when the second control circuit CNT2‴ receives the detection result that the charge plug Pc is not electrically connected to the power storage battery B1 from the charge plug connection detection circuit DCc1 and the detection result that the discharge plug Pd is electrically connected to the power storage battery B1 from the discharge plug connection detection circuit DCd1 (YES in Step S603), the second control circuit CNT2‴ sends the detection results and the discharging specification αd of the power storage battery B1 to the first control circuit CNT1 (in Step S604).

On the other hand, when the second control circuit CNT2‴ does not receive the detection result that the charge plug Pc is not electrically connected to the power storage battery B1 from the charge plug connection detection circuit DCc1 or the detection result that the discharge plug Pd is electrically connected to the power storage battery B1 from the discharge plug connection detection circuit DCd1 (NO in Step S603), the second control circuit CNT2‴ sets the charge plug connection relay Rc2 in the open state and sets the discharge plug connection relay Rd2 in the closed state (in Step S605). In Step S605, the second control circuit CNT2‴ sets the charge plug connection relay Rc2 and the discharge plug connection relay Rd2 in the open state.

Next, when the second control circuit CNT2‴ receives the detection result that the charge plug Pc is not electrically connected to the power storage battery B2 from the charge plug connection detection circuit DCc2 and the detection result that the discharge plug Pd is electrically connected to the power storage battery B2 from the discharge plug connection detection circuit DCd2 (YES in Step S606), the second control circuit CNT2‴ sends the detection results and the discharging specification βd of the power storage battery B2 to the first control circuit CNT1 (in Step S607). For example, the discharging specification βd includes a current capacity and a voltage of the power storage battery B2 during the discharging of the power storage battery B2.

On the other hand, when the second control circuit CNT2‴ does not receive the detection result that the charge plug Pc is not electrically connected to the power storage battery B2 from the charge plug connection detection circuit DCc2 or the detection result that the discharge plug Pd is electrically connected to the power storage battery B2 from the discharge plug connection detection circuit DCd2 (NO in Step S606), the second control circuit CNT2‴ sends the detection results that the charge plug Pc is not electrically connected to the power storage battery B1 or the power storage battery B2 and the discharge plug Pd is not electrically connected to the power storage battery B1 or the power storage battery B2 to the first control circuit CNT1 (in Step S608).

When the second control circuit CNT2‴ receives the charging instruction for the power storage battery B1 (NO in Step S601 and YES in Step S609), the second control circuit CNT2‴ sets the charge plug connection relay Rc1 in the closed state and sets the discharge plug connection relay Rd1 in the open state (in Step S610). In Step S610, the second control circuit CNT2‴ sets the charge plug connection relay Rc2 and the discharge plug connection relay Rd2 in the open state.

Next, when the second control circuit CNT2‴ receives the detection result that the charge plug Pc is electrically connected to the power storage battery B1 from the charge plug connection detection circuit DCc1 and the detection result that the discharge plug Pd is not electrically connected to the power storage battery B1 from the discharge plug connection detection circuit DCd1 (YES in Step S611), the second control circuit CNT2‴ sends the detection result that the charge plug Pc is electrically connected to the power storage battery B1, the detection result that the discharge plug Pd is not electrically connected to the power storage battery B1, and the charging specification αc of the power storage battery B1 to the first control circuit CNT1 (in Step S612).

On the other hand, when the second control circuit CNT2‴ does not receive the detection result that the charge plug Pc is electrically connected to the power storage battery B1 from the charge plug connection detection circuit DCc1 or the detection result that the discharge plug Pd is not electrically connected to the power storage battery B1 from the discharge plug connection detection circuit DCd1 (NO in Step S611), the second control circuit CNT2‴ sets the charge plug connection relay Rc2 in the closed state and sets the discharge plug connection relay Rd2 in the open state (in Step S613). In Step S613, the second control circuit CNT2‴ sets the charge plug connection relay Rc2 and the discharge plug connection relay Rd2 in the open state.

Next, when the second control circuit CNT2‴ receives the detection result that the charge plug Pc is electrically connected to the power storage battery B2 from the charge plug connection detection circuit DCc2 and the detection result that the discharge plug Pd is not electrically connected to the power storage battery B2 from the discharge plug connection detection circuit DCd2 (YES in Step S614), the second control circuit CNT2‴ sends the detection result that the charge plug Pc is electrically connected to the power storage battery B2, the detection result that the discharge plug Pd is not electrically connected to the power storage battery B2, and the charging specification βc of the power storage battery B2 to the first control circuit CNT1 (in Step S615). For example, the charging specification βc includes a current capacity and a voltage of the power storage battery B2 during the charging of the power storage battery B2.

On the other hand, when the second control circuit CNT2‴ does not receive the detection result that the charge plug Pc is electrically connected to the power storage battery B2 from the charge plug connection detection circuit DCc2 or the detection result that the discharge plug Pd is not electrically connected to the power storage battery B2 from the discharge plug connection detection circuit DCd2 (NO in Step S614), the second control circuit CNT2‴ sends the detection result that the charge plug Pc is not electrically connected to the power storage battery B1 or the power storage battery B2 and the detection result that the discharge plug Pd is not electrically connected to the power storage battery B1 or the power storage battery B2 to the first control circuit CNT1 (in Step S608).

Thus, in the state where the charge plug Pc and the discharge plug Pd are plugged into the power storage battery B at all times, the charge plug Pc is set not to be electrically connected to the power storage battery B and the discharge plug Pd is set to be electrically connected to the power storage battery B during the rapid charging of the battery Bv, as well as the charge plug Pc is set to be electrically connected to the power storage battery B and the discharge plug Pd is set not to be electrically connected to the power storage battery B during the charging of the power storage battery B, so that the handling of the charge plug Pc and the discharge plug Pd by the user is omitted.

In addition, according to the fourth embodiment, also in a case where a plurality of types of the power storage batteries B is connected to the charger Ch‴, specifications of the batteries B are automatically obtained and charge/discharge control of the power storage batteries B is performed according to the specifications and communication protocol. This makes the charge/discharge control of the power storage batteries B easier.

The present invention is not limited to the above-described embodiments, and may be modified and improved in various ways within the gist of the present invention.

### <First modification>

In the above-described first to fourth embodiments, the first control circuit CNT1 may be provided with at least one of the second control circuit CNT2, the power conversion circuit PC, and the voltage conversion circuit VC on the same board.

### <Second modification>

In the above-described first to fourth embodiments, the voltage conversion circuit VC may be provided outside the charger Ch, the charger Ch', the charger Ch", or the charger Ch‴.

### <Third modification>

In the above-described first to fourth embodiments, the charge plug Pc, the discharge plug Pd, the connection detection line Lc, the connection detection line Ld, and the communication line L1 may be bundled in one cable, or may be separately provided in each of a plurality of cables.

### <Fourth modification>

In the above-described first to fourth embodiments, a connection detection state of the charge plug Pc and the power storage battery B in the charge plug connection detection circuit DCc is controlled by switching the charge plug connection relay Rc between in the open state and in the closed state. However, the connection detection state of the charge plug Pc and the power storage battery B in the charge plug connection detection circuit DCc may be controlled by switching a power of the charge plug connection detection circuit DCc on and off. For example, the charging system of the present invention may be configured such that a connection detection function of the charge plug connection detection circuit DCc is enabled by switching the power of the charge plug connection detection circuit DCc from off to on, and the connection detection function of the charge plug connection detection circuit DCc is disabled by switching the power of the charge plug connection detection circuit DCc from on to off.

### <Fifth modification>

In the above-described first to fourth embodiments, a connection detection state in the discharge plug connection detection circuit DCd regarding the connection between the discharge plug Pd and the power storage battery B is controlled by switching the discharge plug connection relay Rd between in the open state and in the closed state. However, the connection detection state in the discharge plug connection detection circuit DCd regarding the connection between the discharge plug Pd and the power storage battery B may be controlled by switching a power of the discharge plug connection detection circuit DCd on and off. Here, the connection detection state refers to the state of the discharge plug connection detection circuit DCd with respect to whether the connection is detected or not. For example, the charging system of the present invention may be configured such that a connection detection function of the discharge plug connection detection circuit DCd is enabled by switching the power of the discharge plug connection detection circuit DCd from off to on, and the connection detection function of the discharge plug connection detection circuit DCd is disabled by switching the power of the discharge plug connection detection circuit DCd from on to off.

### <Sixth modification>

The charger Ch‴ of the above-described fourth embodiment includes the plurality of the charge plug connection detection circuits DCc; however, the charger Ch‴ may include only one charge plug connection detection circuit DCc instead of the plurality of the charge plug connection detection circuits DCc, as long as the specification of each power storage battery B to be connected to the charge plug Pc is identified. The charger Ch‴ of the above-described fourth embodiment includes the plurality of the discharge plug connection detection circuits DCd; however, the charger Ch‴ may include only one discharge plug connection detection circuit DCd instead of the plurality of the discharge plug connection detection circuits DCd, as long as the specification of each battery to be connected to the discharge plug Pd is identified.

### <Seventh modification>

In the above-described first to fourth embodiments, the connection of the charge plug Pc and the discharge plug Pd is detected based on the voltage applied to the connection detection line Lc and the connection detection line Ld, respectively; however, the connection of the charge plug Pc and the discharge plug Pd may be detected based on presence or absence of communication between the first control circuit CNT1 and the power storage battery B or a change in resistance of wiring between the charge plug Pc and the voltage conversion circuit VC or between the discharge plug Pd and the voltage conversion circuit VC. For example, when the communication between the first control circuit CNT1 and the power storage battery B is established, the first control circuit CNT1 determines that the charge plug Pc or the discharge plug Pd is electrically connected to the power storage battery B. When the resistance of the wiring between the charge plug Pc and the voltage conversion circuit VC is changed to a specified resistance, the first control circuit CNT1 determines that the charge plug Pc is electrically connected to the power storage battery B. When the resistance of the wiring between the discharge plug Pd and the voltage conversion circuit VC is changed to a specified resistance, the first control circuit CNT1 determines that the discharge plug Pd is electrically connected to the power storage battery B.

### <Eighth modification>

The charger Ch‴ of the above-described fourth embodiment includes the plurality of the charge plug connection detection circuits DCc and the plurality of the discharge plug connection detection circuits DCd; however, the charger Ch‴ may include only one circuit serving as the plurality of the charge plug connection detection circuits DCc and only one circuit serving as the plurality of the discharge plug connection detection circuits DCd, as long as the specification and the communication protocol of each power storage battery B to be connected to the charger Ch are identified.

### <Ninth modification>

In the above-described third and fourth embodiments, when the discharge plug connection relay Rd is in the closed state and the charge plug connection relay Rc is in the open state, the rapid charging of the battery Bv is allowed. However, even when the discharge plug connection relay Rd is in the closed state and the charge plug connection relay Rc is in the closed state, the rapid charging of the battery Bv may be allowed, as long as the charging system has a function that prevents power from being supplied from the voltage conversion circuit VC to the power storage battery B through the charge plug Pc during the rapid charging of the battery Bv. Also in the above-described third and fourth embodiments, when the charge plug connection relay Rc is in the closed state and the discharge plug connection relay Rd is in the open state, the charging of the power storage battery B is allowed. However, in the present invention, even when the charge plug connection relay Rc is in the closed state and the discharge plug connection relay Rd is in the closed state, the charging of the power storage battery B may be allowed, as long as the charging system has a function that prevents power from being supplied from the power storage battery B to the voltage conversion circuit VC through the discharge plug Pd during the charging of the power storage battery B.

### <Tenth modification>

In the above-described first to fourth embodiments, the charging specification and the discharging specification each include the current capacity and the voltage of the power storage battery B; however, the charging specification and the discharging specification may further include a temperature, the number of cells, and a capacity of the power storage battery B.

### <Eleventh modification>

In the above-described first to fourth embodiments, when the communication between the second control circuit CNT2 and the power storage battery B is not established or when the charge plug Pc and the discharge plug Pd are not connected to the power storage battery B although the charge plug connection relay Rc and the discharge plug connection relay Rd are set in the closed state, the second control circuit CNT2 may determine that the power storage battery B is an lead-acid battery.

### <Twelfth modification>

In the above-described first to fourth embodiments, as the voltage of the power storage battery B obtained during the charging or discharging of the power storage battery B, instead of the voltage as information transmitted from the power storage battery B to the first control circuit CNT1 by communication, the voltage of the power storage battery B as a measurement value of the voltage input to the charger Ch may be adopted.

### <Thirteenth modification>

In the above-described first to fourth embodiments, the charger Ch includes the charge plug connection relay Rc, the discharge plug connection relay Rd, the charge plug connection detection circuit DCc, the discharge plug connection detection circuit DCd, and the second control circuit CNT2. However, these components may be provided in the vehicle Ve instead of the charger Ch.

### <Fourteenth modification>

In the above-described first to fourth embodiments, a switching timing from the normal charging or the rapid charging of the battery Bv to the charging of the power storage battery B may be a predetermined timing or a timing when an instruction for the switching is received from the outside of the charging system.

### <Fifteenth modification>

In the above-described first to fourth embodiments, power output from a DC power supply, such as a solar cell, provided outside the charging system may be supplied to the power storage battery B.

## Claims

1. A charging system comprising:
a power conversion circuit (PC) configured to convert AC power supplied from an AC power supply to DC power;
a voltage conversion circuit (VC) configured to convert a voltage of DC power supplied from a first power storage battery (B1, B2) to a specified voltage;
a charge plug connection detection circuit (DCc1, DCc2) configured to detect whether a charge plug (Pc) is electrically connected to the first power storage battery (B1, B2);
a first control circuit (CNT1) configured to control operation of the power conversion circuit (PC) so that the DC power output from the power conversion circuit (PC) is supplied to a second power storage battery (Bv) during charging of the second power storage battery (Bv), the first control circuit (CNT1) being configured to allow the first power storage battery (B1, B2) to be charged when the charge plug connection detection circuit (DCc1, DCc2) detects that the charge plug (Pc) is electrically connected to the first power storage battery (B1, B2); and
a second control circuit (CNT2) configured to control a detection state of the charge plug connection detection circuit (DCc1, DCc2), **characterized in that**
the second control circuit (CNT2) causes the charge plug connection detection circuit (DCc1, DCc2) to detect that the charge plug (Pc) is electrically connected to the first power storage battery (B1, B2) during charging of the first power storage battery (B1, B2).

2. The charging system according to claim 1, further comprising
a discharge plug connection detection circuit (DCd1, DCd2) configured to detect whether a discharge plug (Pd) is electrically connected to the first power storage battery (B1, B2), **characterized in that**
when the discharge plug connection detection circuit (DCd1, DCd2) detects that the discharge plug (Pd) is electrically connected to the first power storage battery (B1, B2), the first control circuit (CNT1) allows the first power storage battery (B1, B2) to be discharged, and
the second control circuit (CNT2) causes the discharge plug connection detection circuit (DCd1, DCd2) to detect that the discharge plug (Pd) is electrically connected to the first storage battery (B1, B2) during the charging of the second power storage battery (Bv).

3. The charging system according to claim 1, **characterized in that**
the charge plug connection detection circuit (DCc1, DCc2) obtains a charging specification (αc, βc) of the first power storage battery (B1, B2) electrically connected to the charge plug (Pc), and
during the charging of the first power storage battery (B1, B2), the first control circuit (CNT1) allows the first power storage battery (B1, B2) to be charged based on the charging specification (αc, βc).

4. The charging system according to claim 2, **characterized in that**
the discharge plug connection detection circuit (DCd1, DCd2) obtains a discharging specification (αd, βd) of the first power storage battery (B1, B2) electrically connected to the discharge plug (Pd), and
during the charging of the second power storage battery (Bv), the first control circuit (CNT1) allows the first power storage battery (B1, B2) to be discharged based on the discharging specification (αd, βd).

5. A charging system comprising:
a power conversion circuit (PC) configured to convert AC power supplied from an AC power supply to DC power;
a voltage conversion circuit (VC) configured to convert a voltage of DC power supplied from a first power storage battery (B1, B2) to a specified voltage;
a discharge plug connection detection circuit (DCd1, DCd2) configured to detect whether a discharge plug (Pd) is electrically connected to the first power storage battery (B1, B2);
a first control circuit (CNT1) configured to control operation of the power conversion circuit (PC) and the voltage conversion circuit (VC) so that the DC power output from the power conversion circuit (PC) and DC power output from the voltage conversion circuit (VC) are supplied to a second power storage battery (Bv) during rapid charging of the second power storage battery (Bv), the first control circuit (CNT1) being configured to allow the first power storage battery (B1, B2) to be discharged when the discharge plug connection detection circuit (DCd1, DCd2) detects that the discharge plug (Pd) is electrically connected to the first power storage battery (B1, B2); and
a second control circuit (CNT2) configured to control a detection state of the discharge plug connection detection circuit (DCd1, DCd2), **characterized in that**
the second control circuit (CNT2) causes the discharge plug connection detection circuit (DCd1, DCd2) to detect that the discharge plug (Pd) is electrically connected to the first power storage battery (B1, B2) during the rapid charging of the second power storage battery (Bv).

6. A charger (Ch, Ch', Ch", Ch‴) comprising:
a power conversion circuit (PC) configured to convert AC power supplied from an AC power supply to DC power;
a voltage conversion circuit (VC) configured to convert a voltage of DC power supplied from a first power storage battery (B1, B2) to a specified voltage;
a charge plug connection detection circuit (DCc1, DCc2) configured to detect whether a charge plug (Pc) is electrically connected to the first power storage battery (B1, B2);
a first control circuit (CNT1) configured to control operation of the power conversion circuit (PC) so that the DC power output from the power conversion circuit (PC) is supplied to a second power storage battery (Bv) during charging of the second power storage battery (Bv), the first control circuit (CNT1) being configured to allow the first power storage battery (B1, B2) to be charged when the charge plug connection detection circuit (DCc1, DCc2) detects that the charge plug (Pc) is electrically connected to the first power storage battery (B1, B2); and
a second control circuit (CNT2) configured to control a detection state of the charge plug connection detection circuit (DCc1, DCc2), **characterized in that**
the second control circuit (CNT2) causes the charge plug connection detection circuit (DCc1, DCc2) to detect that the charge plug (Pc) is electrically connected to the first power storage battery (B1, B2) during charging of the first power storage battery (B1, B2).
